# EUROPEAN PATENT APPLICATION

(11) **EP 0 679 496 A1**
(43) Date of publication of application: **02.11.1995**
(21) Application number: 95830161.6
(22) Date of filing: 24.04.1995
(51) Int. Cl.: B29C 47/08, B29C 47/14

(54) **Assembly system of the parts of an extruder head for thermoplastic laminates**

(30) Priority: 26.04.1994 IT VA940008
(71) Applicant: OFFICINE FRATELLI CARRARO s.n.c., DI CARRARO GINO, ANGELO E C., I-21050 Bisuschio (IT)
(72) Inventor: Soffiantini, Onorato, I-21100 Varese (IT); Sechi, Mario, I-21100 Varese (IT)
(74) Representative: Pellegri, Alberto

(57) **Abstract**

The separate parts (1, 2) making up an extruder head, in particular for thermoplastic materials, are solidly fastened together by means of a number of brackets (9) slidingly inserted in a guide (8a, 8b) formed in the coupling face of one of the head parts. A protruding portion of the brackets (9) is received in cavities (12) formed in the coupling face of the other head part and engaged by a pin (14) inserted through a transverse hole (11). Tightening is preferably achieved by means of a socket head screw (18), passing through a threaded hole (19) perpendicular to said transverse hole (11), acting against the pin passed transversely through the bracket (9). The system is sturdy and accelerates tightening and disassembly operations, to perform the necessary periodical cleaning of the extrusion channels. Insertion and the extraction of the pins (14) can be made extremely fast by using special quick action mechanisms (15).

## Description

The invention relates to a system for assembling the parts forming an extruder head, particularly a head for thermoplastic materials.

Extruder heads generally consist of two or more parts assembled together, joining whereof defines internal spaces through which the plastic material is fed at high pressures in order to be extruded through an extruding slot.

Normally, said internal spaces define an inlet channel for the plastic material, through which the material reaches a distributing channel - also defined by the coupling of two parts - which extends behind the slot forming the extruding channel.

In the case wherein multilayer laminates are to be produced, the extruder head may consist of more than two parts (for example 3), providing, between the coupling faces of the separate parts, the same number of canalisation systems, separate one from the other and converging eventually into a single slot, near the extruding mouth.

The parts forming the extruder head must therefore be coupled in such a way as to ensure perfect sealing to prevent the plastic material, maintained fluid by heating the extruder head to a set process temperature, from seeping (extruding) between the coupling faces of the parts tightened together into the cavities which house the fastening members, or from extruding outwards.

These requirements, together with the fact that extruding pressures are generally extremely high, impose particularly strong structures and high precision machining of the parts coupling together to form the extruder head.

On the other hand, extruder heads must necessarily be disassembled in order to remove plastic material residues and concretions caused by resin carbonisation. It is in fact important, in order to avoid the formation of resistant concretions inside the channels for distributing the plastic material to the extruder head, to rapidly disassemble the extruder head, at the end of an extrusion cycle, so that resin residues do not harden or carbonise on the internal surfaces.

It appears evident that there is a combination of conflicting requirements: stoutness and accurate tightening on the one hand, and need to be able to disassemble the parts which make up the extruder head rapidly and with minimal effort, on the other.

According to the standard technique, sealing is ensured by the use of numerous large stud bolts for tightening together two adjacent parts. Normally, from thirty to forty screws per linear metre can be used along an extruder head, suitable, for example, for producing very wide and flat sheets. When tightening, all the screws must be screwed tightly, whereas for loosening and disassembling the head, all the screws have to be unscrewed completely and removed.

In order to reduce the efforts involved in these long and laborious operations, which should be performed as swiftly as possible also for reasons other than those arising from productivity needs, a tightening system has been devised as an alternative to the use of a large number of stud bolts. It is described in the Italian patent application No. MI/92/A/002916, filed on 21 December 1992. According to this technique for assembling and tightening the parts forming an extruder head, each of the parts forming the extruder head is provided with a longitudinal cavity, open on the coupling face with another part forming the extruder head, so that, by coupling the two parts one to the other, the respective longitudinal cavities define a channel with a C-shaped section, having the inner surfaces of the wings of the C-shaped channels diverging. Suitable C-shaped blocks having the inner surfaces of the C-shaped wings diverging with the same angle of inclination of the similarly slanted surfaces of the longitudinal channel, can therefore be slidingly inserted inside respective channels, as "fork shaped" members for connecting together the two parts of the head. Tightening is performed by means of pairs of pressing screws, distributed along the extent of the coupling edges of the two parts, acting on the back of said C-shaped block (fork). The pressure exerted by the screws, by distributing itself over the "conical" coupling tightens the parts together.

Although eliminating the need for complete unscrewing and removal of the screws, to disassemble the parts it is however necessary, after loosening and unscrewing the pressing screws sufficiently, to slide out the joining fork or block, with a C-shaped section, of the longitudinal channel. This operation is, in any case, somewhat laborious, often made difficult by infiltration of plastic material inside the relatively ample sliding cavity of the C-shaped block. Necessarily, the C-shaped channel has a relatively large volume and, in the event of infiltration of plastic material inside it, its disassemby and cleaning may become extremely burdensome.

Another disadvantage of this system is due to the fact that the pressing screws are arranged along the L-shaped edges of the two coupled head parts, which define the channel, inside which the C-shaped block is inserted. Therefore, the reaction force of the pressure exerted by the screws on the tightening block inserted inside the channel tends to bend the respective edge and/or to diverge the coupling faces of the two head parts. This increases the possibility of infiltration of the plastic material from the inlet and distributing channel into the C-shaped channel, thus causing difficulties during removal of the C-shaped block (fork) fastener.

Another disadvantage is due to the fact that the threaded holes of the pressing screws are formed through the relevant part of the extruder head. Therefore, the wear resulting from repeated cycles of assembly and disassembly of the head makes it necessary to replace the entire unit or the parts which make up the extruder head.

A more effective system for assembling and tightening together the parts that form up an extruder head would be therefore very useful. This system should allow the head to be dismantled rapidly, and the parts of the tightening system subject to wear to be economically replaced, without requiring the replacement or repair of the whole unit or of the major parts which compose the extruder head. Furthermore, the fastening system should allow, as a safeguard a relatively simple and safe alternative disassembly procedure, in the event of accidental infiltration of plastic material that could render the normal disassembly operations difficult.

The new system for assembling and tightening together the parts forming an extruder head - which is the object of this invention - fully meet these requirements, while achieving other important advantages.

Basically, the system devised in this invention employs a number of brackets, slidingly inserted along a longitudinal guide having undercut surfaces, of one of the blocks to be coupled one to another in assembling an extrusion head.

Each bracket projects from the coupling face of the head part provided with the anchoring guide of the brackets. This projecting part of each bracket has a hole transversal to the longitudinal direction of the anchoring guide.

Upon assembling of the head parts together, the projecting and perforated part of each bracket is received in a cavity formed in the coupling face of the other head part.

This other head part or block is provided with means suitable for inserting a blocking pin through the transverse hole of each of said brackets.

According to one embodiment, both the transverse hole of the brackets and the pin that is inserted inside said holes can be conical or have functionally slanted surfaces. In this way, the pin may be engaged forcibly through the bracket hole and cause the raising of the bracket base held into the undercut guide, thus tightening the two parts together.

According to an alternative embodiment, each blocking pin is freely inserted in the transverse hole of the respective bracket, until it projects on the opposite side, extending inside an end portion of the insertion hole of the pin, formed in the head block. In this case, the transverse hole of the brackets, crossed by the respective pin, can have such a diameter as to allow the pin to pass through freely, with a certain clearance.

Tightening is achieved by tightening a socket head screw through a second threaded hole formed in said projecting part of each bracket, perpendicular to said first transverse hole and to said longitudinal direction of the anchoring guide of the bracket base. The socket head tightening screw, which can be manoeuvred through a hole in the second head part, abuts against the surface of the pin passed through the transverse hole of the bracket, tightening the bracket anchored in the undercut guide of the first head part.

The tightening forces act in such a way as to avoid the tendency to separate or bend the head parts being coupled together.

The parts of the tightening system which are subject to wear can be replaced individually, independently of the major parts or blocks which functionally compose or define the extruder head.

The engagement of the pins in the transverse holes of the respective brackets can be conveniently performed by automated or quick action mechanisms, considerably reducing the times of assembly and disassembly of the head.

The latter advantage may even be more marked by operatively separating the two operations of engagement of the pin in the transverse hole of the bracket and the subsequent tightening of the assembly by means of the socket head screw. According to this preferred embodiment of the invention, engagement of the pins, with no load applied, as a simple forward movement of the pins into an engaged position, can conveniently be performed by using reversible quick action means, such as, for example, pneumatic or hydraulic jacks, or by hand, using gearing-up/gearing-down devices which allow translation (forward and backward movement of the pin) to be performed with a limited number of turns of a drive crank or key.

After rapidly moving the pins forwards into the engaged position, tightening can be performed by tightening the respective socket head screws with a torque wrench.

Tightening and loosening operations are performed with an extremely small number of rotations of the socket head screw, so that tightening and loosening of the tightening tension can be performed also by hand in an extremely quick manner.

The whole assembly and tightening arrangement of the invention is such that it can be realized with extremely small clearances and without creating cavities of large empty volume, which accidentally may be filled by plastic material in case of infiltration.

Another advantage is represented by the fact that, should the different members become "stuck together" due to infiltration and solidification of the plastic material, the head can still be dismantled without difficulty. This is achieved by disassembling and removing the mechanisms for quickly displacing the pins, if any, from their respective housings. Therefore, even in exceptional cases, it is always possible to disassemble the head by dismantling the pin inserting/disinserting units, that may be mounted on the external face of the second block.

The various aspects and advantages of the system devised in this invention will become even clearer from the following description of some important embodiments and by making reference to the accompanying drawings, wherein:
**Figure 1** is a perspective view of two parts which can be coupled one to the other to form an extruder head;
**Figure 2** is a scheme showing the functional structure of the assembly brackets of the invention system;
**Figures 3** and **4** are simplified sectional views of an extruder head manufactured according to the present invention, in the assembled and disassembled or exploded view respectively;
**Figures 5** and **6** show the same number of extruder heads made up of several parts assembled together, using the assembly system of the invention.

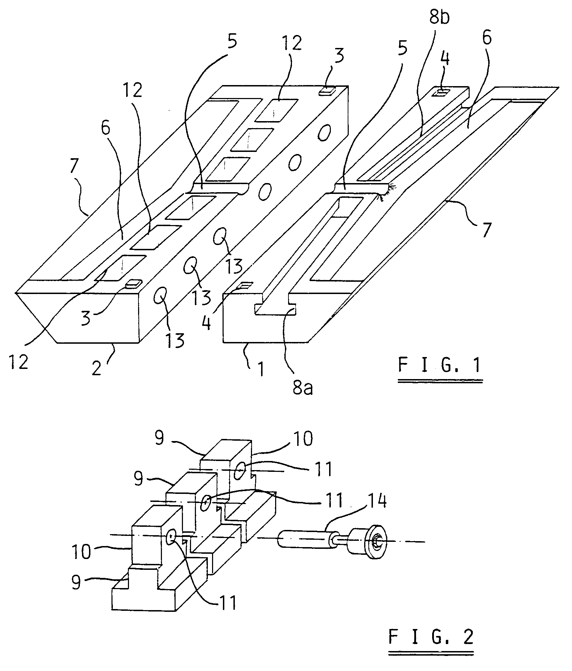

With reference to Fig. 1, an extruder head for flat mono-layer laminates may consist substantially of two stout steel parts 1 and 2 which can be coupled together to define the extrusion head. The correct overlapping of the two parts 1 and 2 is commonly ensured by a number of centring pins or splines 3, designed to engage in the housings 4 on the coupling face of the other part. The coupling of the two parts 1 and 2 defines an inlet channel 5 for the plastic material, which is fed into a distributing channel 6 which extends behind the extruding slot 7.

According to the present invention, one of the two parts (1) forming the extruder head is provided with a substantially longitudinal guide or groove 8a-8b, which, in the example shown, is interrupted in the centre at the inlet channel 5 for the plastic material. Therefore, two separate groove sections 8a and 8b are formed on either side of channel 5 defined in a median position in relation to the longitudinal extension of the extruder head.

The groove or the two parts of groove 8a and 8b can have an upturned T-shaped section. As will be clear to an expert eye, the upturned T shape of the groove is not strictly essential and can also be different. The condition that the section of the groove 8a (8b) define an "undercut" is however fundamental. The section may therefore also be different, for example trapezoidal.

During assembly of the head, a number of brackets 9, having a base portion with a section suitable for sliding and being retained in the guides 8a (8b) to provide the anchoring of the brackets 9 to the block 1, are inserted in the guides (for example one next to the other).

Each bracket 9 extends beyond the coupling plane of the part 1 and the projecting portion 10 is provided with at least one transverse hole 11. Upon the assembling of the extruder head, the projecting portion 10 of each bracket 9 is received in a respective cavity 12, purposely formed on the coupling face of the second head part 2. There can be a single cavity 12 for housing several brackets, or preferably, as shown, a pocket cavity 12 can be formed for each bracket.

A pin 14, suitable for engaging the hole 11 of a respective bracket 9, can therefore be inserted through the holes 13 of the block 2, having an axis parallel to the coupling plane of the block.

According to a first embodiment of the tightening system, both the hole 11 and the pin 14 are conical in order to produce the tightening of the coupled head parts 1 and 2, by forcing the coupling of the conical pin 14 into the conical hole 11 of each bracket, which has its base anchored in the guides 8a (8b) of the first block 1.

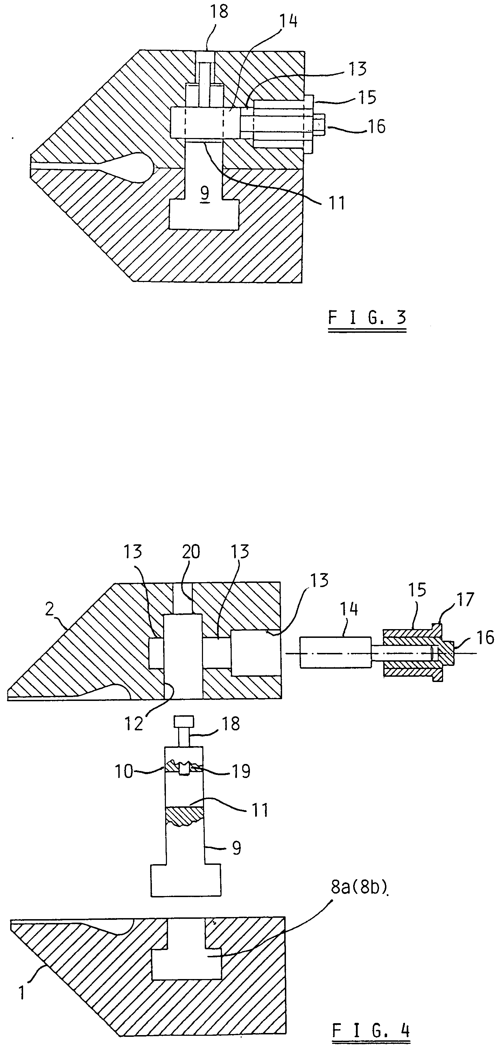

According to a modified embodiment of the tightening device of the invention, shown in Figures 3 and 4, tightening does not occur by forcing a conical coupling between the pin 14 and the hole 11 of the respective bracket 9, but instead, by means of tightening members separate from the members for engaging the pin 14 in the hole 11 of the respective bracket 9.

As shown in Fig. 3, the transverse hole 11 of the bracket 9 can be cylindrical and have such a diameter as to determine a certain clearance in relation to the diameter of the pin 14, also preferably cylindrical. The pin 14 may be moved forwards and backwards swiftly, by means of a special gearing-down/gearing-up device 15, that moves it forwards (during assembly) making it pass through the hole 11 of the bracket 9, and abut inside the end part of the hole 13.

The pin 14 can therefore be rapidly engaged and disengaged from the respective bracket, in the total absence of tightening force of the assembly. These forward and backward movements can therefore be performed by quick action means which, in the case shown, can consist of a threaded (right-hand or lefthand) sleeve assembly, having different pitches, so as to produce the linear forward or backward movement of the pin 14 with a reduced number of turns of a crank, which can be engaged in the drive head 16 of the mechanism 15. The whole pin assembly driven by the mechanism 15 can be conveniently mounted inside the housing 13 of the head part 2. The assembly 15 can be provided with a mounting flange 17 that can be fastened to the external face of the head part 2 by means of a number of stud bolts (not shown in the drawing). The system is such that, should difficulty arise during disassembly due to accidental cementing together of the internal coupling parts, caused by infiltrations of plastic material eventually solidified, the head may, in any case, be easily disassembled, simply by dismantling individually and removing the entire pin assemblies 15.

According to this alternative embodiment of the system devised in this invention, tightening is performed by fully tightening a socket head screw 18 through a second threaded hole 19 of the projecting part 10 of each bracket 9, whose axis is perpendicular both to the axis of the hole 11 through which the engagement pin 14 passes, and to the longitudinal axis of the guide 8a (8b) of the head part 1.

The drive head of the socket head screw 18 is accessible through a hole 20 which extends from the bottom of the cavity or housing 12 of the head part 2 to the external face of the part itself.

During assembly, after having quickly moved the pins 14 forwards into engagement position (through the hole 11 of the brackets), the respective socket head screws 18 are tightened with a torque wrench so that, by abutting on the pins 14, they exert the required tension on the bracket 9, whose base is "anchored" in the guides 8a (8b) of the head part 1.

Naturally, the clearance of the hole 11 in relation to the external diameter of the pin 14 must be greater than the clearance between the base of the pin and the retaining guides 8a, 8b.

As can be seen, the assembly and tightening system of the invention fully meets the requirements mentioned above.

Upon coupling together head parts 1 and 2 with each other, the tightening force is exerted substantially in such a way as to avoid the tendency to bend or separate the two head parts. The elements of the tightening system which may be subject to wear after repeated cycles of assembly and disassembly of the extruder head dictated by essential process needs, can easily be replaced individually, and at low cost when necessary.

The operations required for assembling and disassembling the extruder head are made considerably faster by the possibility of using quick action forward and backward movement mechanisms for the pins 14 coupled with the fact that tightening and untightening can be performed with a minimum forward or backward turning of the socket head screws 18.

Moreover, due to the fact that the tightening system does not appreciably weaken the rigidity of the parts forming the extruder head, and the particularly effective manner wherein the tightening force is exerted, the number of tightening socket head screws (number of brackets) per linear metre of length of the extruder head can be considerably reduced, thus proportionally reducing the time needed for assembling and disassembling the head.

The tightening system does not require particularly large mechanical clearances between parts, as was for example the case of the system described in the aforementioned Italian patent application No. MI/92/A/002916. On the contrary, the assembly and tightening system of the invention can be realized with small mechanical clearances between parts. This, beside contributing to the stoutness of the assembled head, greatly reduces the gravity of problems resulting from accidental infiltrations of plastic material between the coupling faces of the parts forming the extruder head.

Naturally, the improved assembly and tightening system of the invention is fully compatible with even complex architectures of the extruder head which can be composed of more than two parts coupled one to the other.

Naturally, wherever necessary, the assembly and tightening system of the invention can be reiterated to couple together extruder head parts along a certain coupling face or plane.

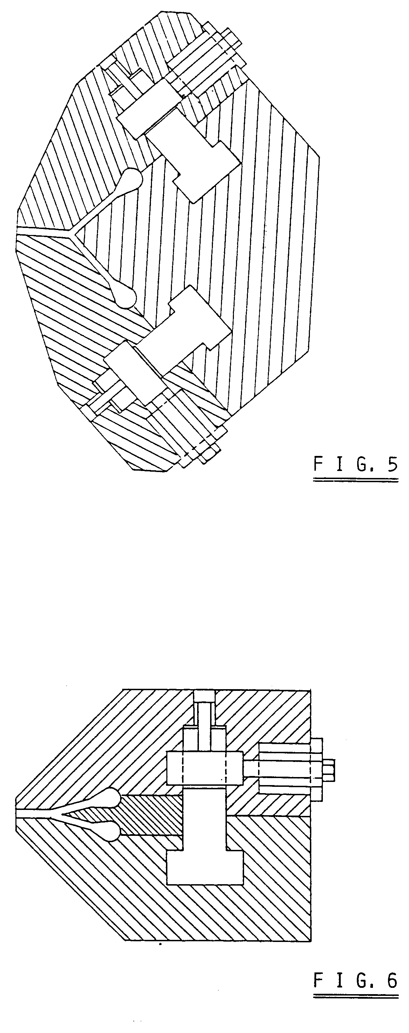

Examples illustrating the use of the invention system in extruder heads consisting of more than 2 parts are schematically shown in Figures 5 and 6.

## Claims

1. System for tightening together parts which can be coupled together to form an extrusion head, at least one of said parts being provided with at least a longitudinal channel or guide with an undercut portion on a coupling face with at least a second part, and characterized in that it comprises
a plurality of brackets slidingly insertable in said guide and having a base portion with a cross section cooperating with said undercut portion of the guide, and projecting from the coupling face of said first part;
the projecting portiion of each bracket having a hole whose axis is transverse to said longitudinal direction;
the coupling face of said second part having cavities suitable to receive the perforated projecting portion of said brackets;
means in said second part for inserting a locking pin through said transverse hole of each bracket and forcing said base portion of the bracket to abut against said undercut portion of said guide.

2. Tightening system as defined in claim 1, characterized in that said guide and said brackets have an upturned T-shaped section.

3. Tightening system as defined in claim 1, characterized in that said guide and said brackets have a trapezoidal section.

4. Tightening system as defined in claim 1, characterized in that said transverse hole and said blocking pin are both conical.

5. Tightening system as defined in claim 1, characterized in that the projecting portion of each bracket is provided with a second threaded hole, perpendicular to said first transverse hole and to said longitudinal direction, engaged by a socket head screw, the manoeuvring head whereof is accessible via a through hole in the end wall of said cavity of said second head part.

6. Tightening system as defined in claim 5, characterized in that said transverse hole is substantially cylindrical, said locking pin is substantially cylindrical and can be moved forwards freely through said transverse hole until it abuts inside the end portion of a hole of said second head part through which said pin slides;
a tightening force of the two coupled parts being exerted by means of said socket head screw abutting against said blocking pin forcing on the surfaces of said hole of the second head part.

7. Tightening system as defined in claim 6, characterized by comprising quick action means for moving forward and backward said pins.

8. Tightening system as defined in claim 7, characterized in that said means comprise pneumatic or hydraulic drive cylinders.

9. Tightening system as defined in claim 7, characterized in that said means consist of a gearing-up/gearing-down mechanism comprising multiple left-hand and right-hand threaded sleeves and with different pitch, suitable for moving said pin forwards into an engaged position and for moving it backwards into a disengaged position with said transverse hole of the projecting part of a respective bracket by a reduced number of rotations of a manoeuvring crank or key.

10. Tightening system as defined in claim 9, characterized in that said mechanism and said pin are assembled inside a flanged cylinder sleeve, installed in a dedicated cavity of said second head part.
